# EUROPEAN PATENT APPLICATION

(11) **EP 1 772 184 A2**
(43) Date of publication of application: **11.04.2007**
(21) Application number: 06121622.2
(22) Date of filing: 02.10.2006
(51) Int. Cl.: B01D 53/94, B01J 23/63, F02B 43/00, B01J 23/89

(54) **Catalyst for oxidizing emissions from compressed natural gas vehicles**

(30) Priority: 04.10.2005 KR 20050092990
(71) Applicant: Heesung Engelhard Corporation, Shiheung-city Kyungki-do 429-450 (KR)
(72) Inventor: Han, Hyun-Sik Suite 235-902 Sujeong Hanyang, 425-140 ANSAN-CITY, KYUNGKI-DO (KR); Lee, Tac-woo Suite 703-902, Greenvil-7-dangi, 1337, 425-796 ANSAN CITY, KYUNGKI-DO (KR); Han, Jae-uk Suite 201, 1127-14, Seonbu-3-dong, 425-832 ANSAN-CITY, KYUNGKI-DO (KR)
(74) Representative: Ahner, Francis

(57) **Abstract**

Disclosed is a catalyst for purifying emissions from compressed natural gas vehicles through oxidation, comprising platinum and palladium, as catalytically active ingredients, supported on a support system including a first palladium-impregnated alumina, a second platinum-impregnated alumina, a composite ceria, and a nickel oxide and loaded on a metal or ceramic carrier. The catalyst shows an excellent conversion rate, thus having great economic and technical advantages over conventional catalysts.

## Description

### BACKGROUND OF THE INVENTION

### 1. Field of the invention

The present invention relates, in general, to a catalyst for purifying emissions from compressed natural gas (CNG) vehicles and, more particularly, to a catalyst showing an excellent oxidative conversion rate in purifying emissions from CNG vehicles, which comprises alumina independently impregnated with platinum and palladium, composite ceria, and NiO.

### 2. Description of the Prior Art

CNG (Compressed Natural Gas), considered as an environmentally clean alternative to gasoline (petrol) or diesel fuels, is made by compressing purified natural gas, otherwise known as naturally produced gas from underground, which commonly indicates combustible gas consisting mainly of hydrocarbons. Largely, gas from oil fields or coal fields, or water-soluble gas existing dissolved in water irrespective of its geographical source, is used as a source for CNG. Oil field gas or coal field gas, composed mainly of methane in combination with carbon dioxide, oxygen and nitrogen, is called dry gas because it cannot be liquefied at room temperature even by pressurization, while oil field gas, including methane in combination with significant amounts of propane and butane, is called wet gas because it is liquefied by pressurization at room temperature. Particularly, automobiles are the field of interest for CNG. When used as a fuel in vehicles, CNG is very economically advantageous because its price is much lower than those of other fuels. In addition, before being fed into cylinders, CNG is mixed as a gas with air in a mixer so as to assure the realization of homogeneous fuel-air mixtures. Further, the fuel-air mixture is perfectly combusted near the theoretical fuel-air value, enjoying the advantages of providing a high combustion yield and allowing the engine to operate silently and undergo less knocking due to slower combustion rates and higher octane values than gasoline. Moreover, CNG engines have advantages over gasoline engines in terms of economy with regard to fuel, engine oil, and engine longevity. Thanks to low boiling points, CNG can be completely vaporized within the cylinder, so that neither is the engine oil diluted nor does the formation of carbon occur. Further, CNG requires no additives which may produce carbon and ashes, leading to the contamination of the oil, and contains no sulfur ingredients which produce emissions causing metal erosion. Emissions from CNG vehicles have only a low content of CO, and thus are odorless and smokeless. Consequently, CNG produces almost no environmental pollutants.

With increasing attention being paid to the environment, stricter environmental regulations have come into effect and active research on CNG vehicles has thus been conducted. Particularly, catalysts for purifying emissions from CNG vehicles are receiving a lot of attention. Most of the purification catalysts currently found in CNG vehicles are three-way catalysts, which are used for gasoline vehicles, but show very low oxidative purification yields for methane, the main component of CNG, in CNG vehicles operating with lean burn systems.

Catalysts for and methods of purifying emissions from CNG vehicles are disclosed in Korean Pat. Nos. 230874 and 461125. According to Korean Pat. No. 230874 (titled "catalyst for purifying emissions from CNG vehicles and purification method therewith"), a catalyst comprising alumina, ceria, and zirconia as supports on which catalytically active precious metals are supported in a ceramic is described as being effectively used to purify emissions from CNG vehicles. Korean Pat. No. 461125 pertains to a catalyst for purifying emissions from CNG vehicles, comprising gamma-alumina, La₂O₃, 1~50 g of CeO₂, 1~20 g of BaO, and 0.1~10 g of a catalytically active ingredient mixture including Pd : Pt in a weight ratio of 5~15:1.

However, the THC (thermal hydrocarbon) conversion rate of these catalysts must be greatly improved. Leading to the present invention, intensive and thorough research into a catalyst for purifying emissions from CNG vehicles through oxidation, conducted by the present inventors, resulted in the finding that the weight ratio of Pd and Pt, co-catalyst ingredients, ceria, the impregnation method of Pd and Pt, and the dry gain effect are involved in the determination of the catalytic activity of the catalyst.

### SUMMARY OF THE INVENTION

Therefore, it is an object of the present invention to provide a catalyst for purifying emissions from CNG vehicles through oxidation at a superior conversion rate.

It is another object of the present invention to provide a method of preparing the catalyst.

In order to accomplish the above objects, the present invention provides a catalyst for purifying emissions from compressed natural gas vehicles through oxidation, comprising platinum and palladium, as catalytically active ingredients, supported on a support system, wherein the supporter system includes a first palladium-impregnated alumina, a second platinum-impregnated alumina, a composite ceria, and a nickel oxide, and is loaded on a metal or ceramic carrier.

In the catalyst, the catalytically active ingredients preferably range in weight ratio from 5:1 to 2:1 Pd : Pt.

In a preferable modification of the catalyst, the composite ceria is composed of CeO2-ZrO₂. In another preferable modification, the weight ratio of the first palladium-impregnated alumina to the second platinum-impregnated alumina range from 70:35 to 84:21. According to a further preferable modification, the weight ratio of the alumina including the first palladium-impregnated alumina and the second platinum-impregnated alumina to the composite ceria ranges from 105:5 to 86:4.

### DESCRIPTION OF THE PREFERRED EMBODIMENTS

A better understanding of the present invention may be realized with the following examples, which are set forth to illustrate, but are not to be construed to limit the present invention.

### EXAMPLE 1

a. 21.0 g/l of a first alumina powder and 84.0 g/l of a second alumina powder were respectively impregnated with chloroplatinate and palladium nitrate to prepare a mixture of Pt- and Pd-impregnated active alumina, in which platinum and palladium amounted to 70g/ft³ in total with a weight ratio of Pt:Pd ranging from 1:2 to 1:5. Together with the mixture, 5 g/l of a CeO₂-ZrO₂ composite ceria powder and 5 g/l of an NiO powder were dispersed in water to give a slurry.
b. The slurry was ball-milled to the extent that 90% thereof ranged in particle size from 8 to 10 µm. A cordierite was coated with the fine slurry, dried at 150 to 160°C for 10 min and backed at 530 to 550°C for 40 min to afford a catalyst.

### EXAMPLE 2

A catalyst was prepared in the same procedure as in Example 1, with the exception that 35.0 g/l of a gamma alumina powder and 70.0 g/l of a gamma alumina powder were impregnated with chloroplatinate and palladium nitrate, respectively.

The catalysts prepared in Examples were tested for THC conversion rate at 350 to 450°C with the following model gas flowing at a space velocity of 48,000/h, and the results are summarized in Table 1, below. In Table 1, the conventional catalyst refers to a catalyst currently used in CNG vehicles.

Model gas composition: 1000ppm HC (3% C₃H₈, 15% C₂H₆, 82% CH₄), 400ppm CO, 300ppm NO, 8% O₂, 5% CO₂, 10% H₂O

**TABLE 1. THC Conversion Rate (%)**

| Catalysts | 350°C | 400°C | 450°C |
|---|---|---|---|
| Conventional Catalyst | 2% | 7% | 18% |
| Catalyst of Ex. 1 | 8% | 35% | 80% |
| Catalyst of Ex. 2 | 7% | 33% | 75% |

Below, a detailed description will be given of the present invention in conjunction with the research procedure leading to the present invention.
1. In order to examine whether BaO effectively functions as a co-catalytic ingredient, a BaO powder, alone or together with NiO, was mixed with the supporter alumina and the oxygen-storing material ceria as in Example 1 to prepare a catalyst. For comparison, NiO alone was separately mixed with the supporter and the oxygen-storing material, as well. The catalysts thus obtained were tested for THC conversion rates and the results are given in Table 2, below. The total load of Pt and Pd on each of the catalysts amounted to 70 g/ft³ with a weight ratio of Pt/Pd=1/5. 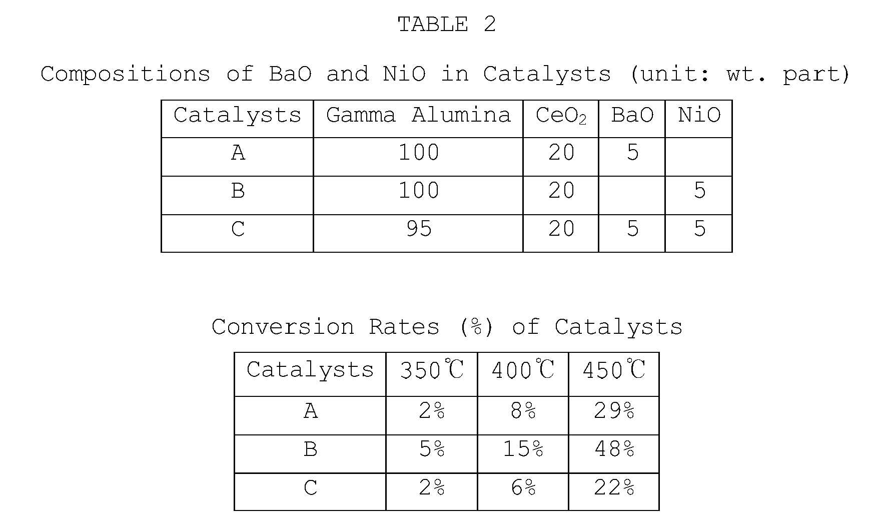 As is clearly apparent from the data of Table 2, BaO, used as a supporter in a conventional catalyst for purifying emissions from CNG vehicles, is regarded as being poor in terms of oxidation efficiency, whereas NiO was determined to make a significant contribution to improving the conversion rate.
2. In order to examine whether ZrO₂ can effectively function as a co-catalyst in purifying emissions from CNG vehicles, a catalyst was prepared with a ZrO₂ powder admixed with the supporter alumina and ceria powder as in the above examples, and the THC conversion rate thereof was examined. For comparison, a catalyst was prepared without ZrO₂. On each of the catalysts, Pt and Pd were loaded in an amount of 70g/ft³ in total, with a weight ratio of Pt/Pd=1/5. 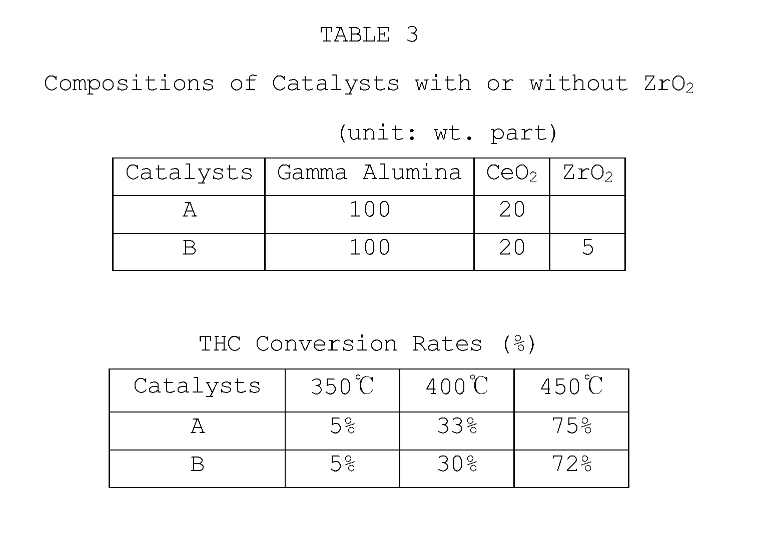 Accordingly, zirconia was not considered a factor for improving the oxidation rate. However, when combined with a supporter, zirconia was observed to improve the thermal stability of the catalyst, and thus could be dispersed over supports in consideration of CNG engine conditions if necessary.
3. In order to examine the effect of the physicochemical properties of the supporter alumina on THC conversion rate, catalysts based on Alumina A, Alumina B and Alumina C (pure alumina) were tested for oxidative activation. On each of the catalysts, Pt and Pd were loaded in an amount of 70g/ft³ in total, with a weight ratio of Pt/Pd=1/5. 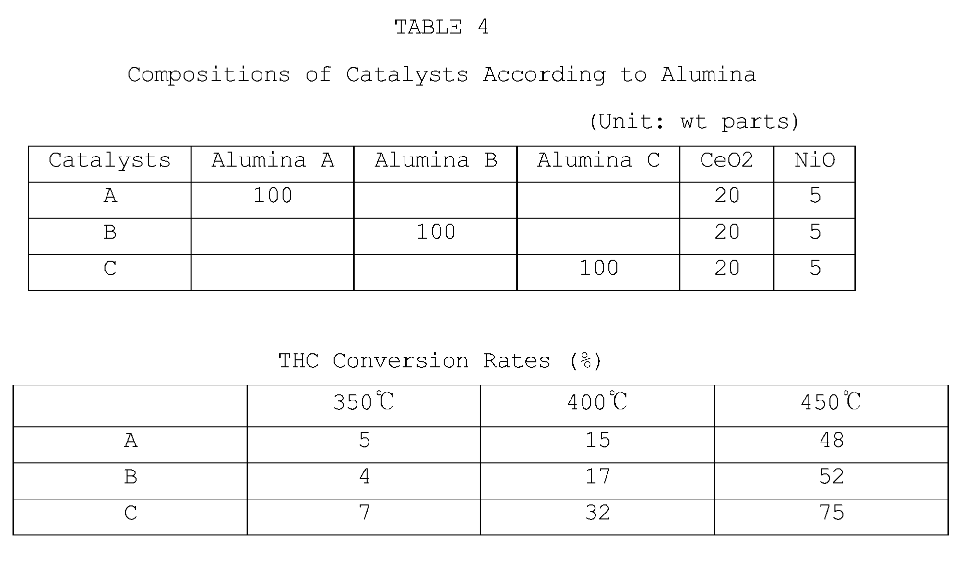 As understood from the data of Table 4, Alumina C having a larger specific surface area (BET), showed higher activity than did the others.
4. Also, ceria, an oxygen-storing material, was examined with regard to THC conversion rate. In this regard, catalysts prepared with composite ceria (CeO2-2rO₂) and pure ceria were tested for activity. On each of the catalysts, Pt and Pd were loaded in an amount of 70g/ft³ in total, with a weight ratio of Pt/Pd=1/5. 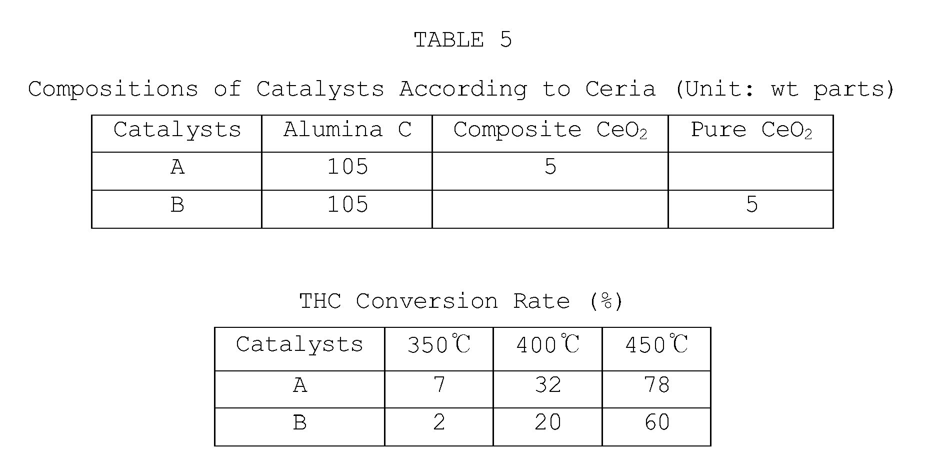 Data from Table 5 show that the catalyst, based on the composite ceria CeO₂-ZrO₂, for purifying emissions from CNG vehicles has advantages over that based on pure ceria in terms of the THC conversion rate.
5. An examination was made of the effect of impregnation methods of precious metal on catalytic activity. In this regard, alumina was impregnated with Pt and Pd sequentially (continuous impregnation) or separately (separate impregnation). On each of the catalysts, Pt and Pd were loaded in an amount of 70g/ft³ in total, with a weight ratio of Pt/Pd=1/5. 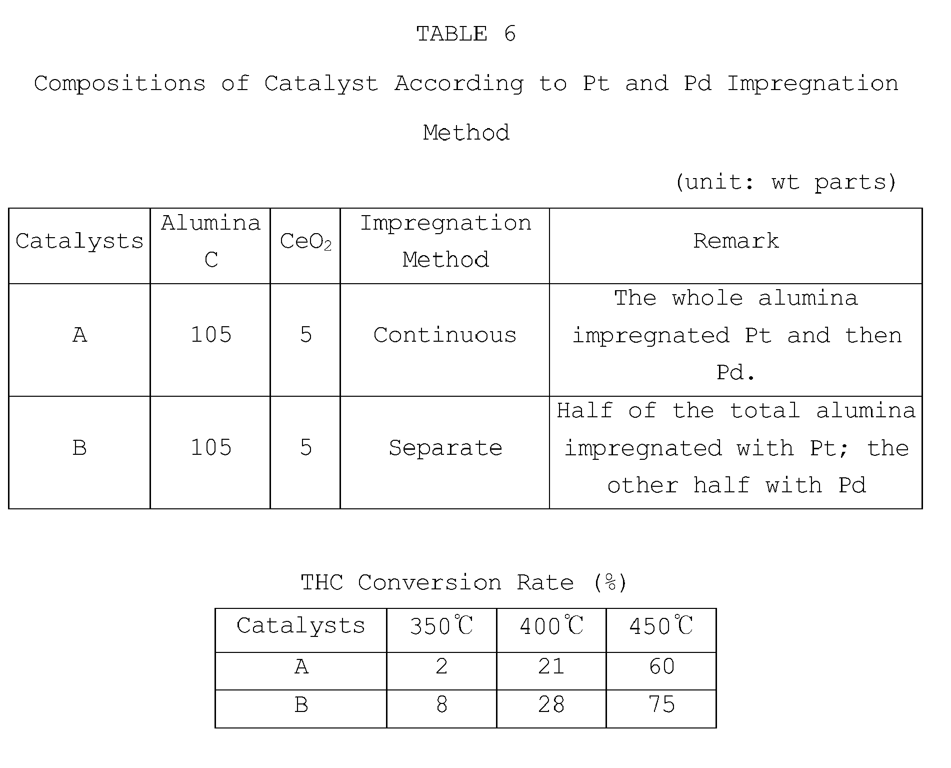 Because the reaction between Pt and Pd was prevented, the catalyst based on alumina separately impregnated with Pt and Pd was found to have superior oxidative activity to that based on alumina sequentially impregnated with Pt and Pd. Further, catalysts prepared by impregnating a mixture of the oxygen-storing material ceria and the supporter alumina with precious metal were tested for THC conversion rate in order to examine the effect of the reaction between precious metal and ceria on the conversion rate. A negative result was obtained from the test. Accordingly, Pt and Pd must be treated separately from ceria and supported only on alumina to prepare an optimal catalyst.
6. To examine how much the degree of dispersion of Pt and Pd influences the oxidative activity of the catalyst, catalysts were prepared by impregnating different amounts of alumina having Pt and Pd loaded thereon, and were tested for catalytic activity. On each of the catalysts, Pt and Pd were loaded in an amount of 70g/ft³ in total, with a weight ratio of Pt/Pd=1/5. 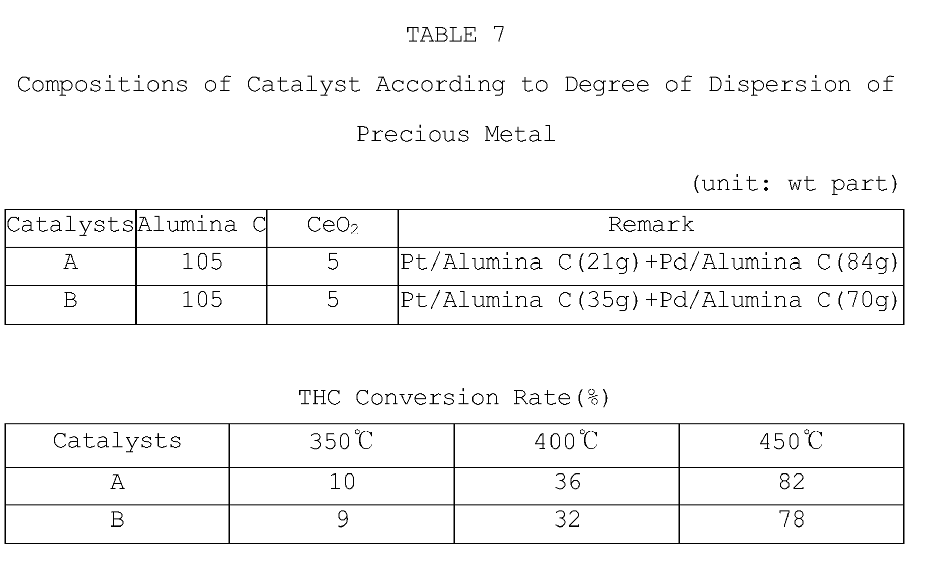 It is apparent from the data of Table 7 that a higher degree of dispersion of Pd rather than Pt induces a better oxidative conversion rate.
7. In order to examine whether the dry gain in combination with the degree of dispersion of Pt and Pd influences catalytic activity, Pt and Pd were loaded on different amounts of alumina at different dry gains. In each of the catalyst, the weight of Pt and Pd amounted to 70g/ft³ in total, with a weight ratio of Pt/Pd=1/5.

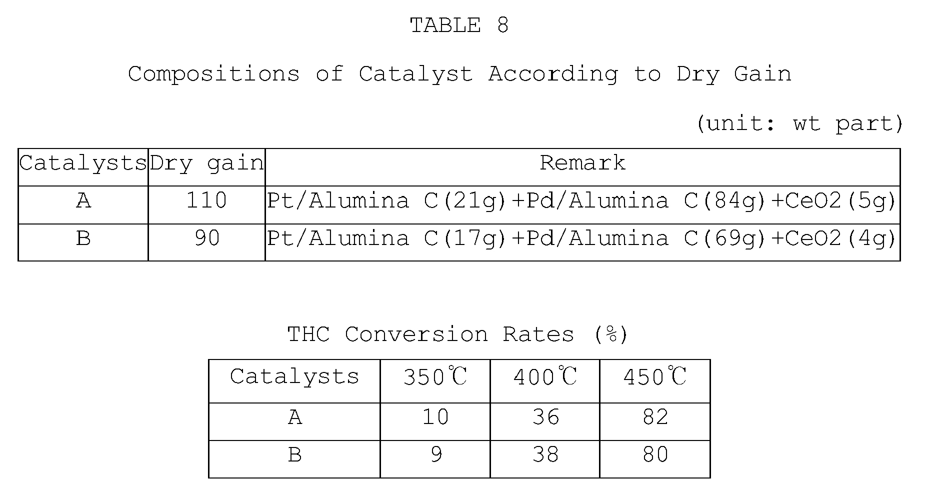

Contrary to expectation, dry gain was observed to have no influence on oxidative activity. Also, it was found that a dry gain as low as 90 is sufficient to attain catalytic activity that meets environmental regulations, indicating that there is no need for an excessive wash coat.

Taken together, the data obtained in the above examples and tests demonstrate that the catalyst for purifying emissions from CNG vehicles, which is prepared in consideration of various factors including weight ratios of precious metal, for example, platinum and palladium, to co-catalytic ingredients, properties of supporters and oxygen-storing materials, impregnation method, the degree of dispersion of Pt and Pd, etc., shows an excellent conversion rate, thus having great economic and technical advantages over conventional catalysts.

Although the preferred embodiments of the present invention have been disclosed for illustrative purposes, those skilled in the art will appreciate that various modifications, additions and substitutions are possible. Accordingly, such modifications, additions and substitutions should be understood as falling within the scope and spirit of the invention.

As described hitherto, a catalyst prepared in accordance with the present invention can purify emissions from CNG vehicles at excellent oxidation yield compared to conventional ones, and thus CNG vehicles, which are expected to become popular in the near future, can provide a solution to the problem of environmental degradation.

## Claims

1. A catalyst for purifying emissions from compressed natural gas vehicles through oxidation, comprising platinum and palladium, as catalytically active ingredients, supported on a support system, wherein the supporter system includes a first palladium-impregnated alumina, a second platinum-impregnated alumina, a composite ceria, and a nickel oxide, and loaded on a metal or ceramic carrier.

2. The catalyst as defined in claim 1, wherein the catalytically active ingredients range in weight ratio from 5:1 to 2:1 Pd : Pt.

3. The catalyst as defined in claim 1, wherein the composite ceria is composed of CeO2-ZrO₂.

4. The catalyst as defined in claim 1, wherein the weight ratio of the first palladium-impregnated alumina to the second platinum-impregnated alumina ranges from 70:35 to 84:21.

5. The catalyst as defined in claim 1, wherein the weight ratio of the alumina including the first palladium-impregnated alumina and the second platinum-impregnated alumina to the composite ceria ranges from 105:5 to 86:4.
